# EUROPEAN PATENT APPLICATION

(11) **EP 2 573 359 A2**
(43) Date of publication of application: **27.03.2013**
(21) Application number: 12184359.3
(22) Date of filing: 14.09.2012
(51) Int. Cl.: F02C 3/30, F02C 9/40

(54) **Gas turbine engine system and method for providing a fuel supplied to one or more combustors in a gas turbine engine system**

(30) Priority: 23.09.2011 US 201113242588
(71) Applicant: GENERAL ELECTRIC COMPANY, Schenectady, NY 12345 (US)
(72) Inventor: Wildener, Stanley Kevin, Greenville, SC South Carolina 29615 (US)
(74) Representative: Cleary, Fidelma

(57) **Abstract**

According to one aspect of the invention, a method for providing a fuel supplied to one or more combustors in a gas turbine engine system includes partially oxidizing a fraction of primary fuel (117) in one or more fuel circuits (102) of the gas turbine engine system, in the absence of a catalyst, with a non-catalytic fuel reformer (100) to form a reformate, wherein the fraction of primary fuel (117) and an oxidant are mixed and burned in a predetermined ratio in the non-catalytic fuel reformer (100). The method also includes causing a water-gas shift reaction in a non-catalytic reaction passage (126) in the non-catalytic fuel reformer (100) by directing a selected amount of secondary fuel (122) and a selected amount of steam (124) into the partially oxidized fraction of fuel (117), thereby producing a reformate (128) and mixing the reformate (128) with a remaining fraction of fuel (130) to produce a mixed fuel (140) stream and supplying the mixed fuel stream (140) to the one or more combustors.

## Description

### BACKGROUND OF THE INVENTION

The subject matter disclosed herein relates to gas turbine engine combustion systems, and more particularly, to methods and apparatus for fuel reforming to enhance the operability of the combustion systems.

One class of gas turbine combustors achieve low NOx emissions levels by employing a lean premixed fuel combustion process wherein the fuel and an excess of air that is required to burn all the fuel are mixed prior to combustion to control and limit thermal NOx production. This class of combustors, often referred to as Dry Low NOx (DLN) combustors, are continually redesigned to perform at higher efficiencies while producing less undesirable air polluting emissions. Higher efficiencies in gas turbines with DLN combustors are generally achieved by increasing overall gas temperature in the combustion chambers. However, thermal NOx emissions are typically reduced by lowering the maximum gas temperature in the combustion chamber. The demand for higher efficiencies, which results in hotter combustion chambers, conflicts to an extent with the regulatory requirements for low emission DLN gas turbine combustion systems. In addition, if the fuel-air mixture in a combustion chamber is too lean and the combustion temperature too cool, excessive emissions of carbon monoxide (CO) and unburned hydrocarbon (UHC) can occur. CO and UHC emissions result from incomplete fuel combustion. The temperature in the reaction zone should be sufficiently high to support complete combustion or the chemical combustion reactions will be quenched before achieving equilibrium. At the same time the temperature should be low enough to prevent excessive NOx formation..

One method for improving this tradeoff is by adding hydrogen or other non-methane hydrocarbon fuel species to the standard fuel to increase reactivity in the combustor. Catalytic reformers have been used to create hydrogen from a fuel to feed to the combustor. Catalytic reformers, however, are costly and can require regular maintenance or replacement. For example, the catalyst activity can diminish over time thereby requiring the reformer to be recharged with fresh catalyst. Another potential issue is the reformer catalyst becoming poisoned, for instance by sulfur in the fuel, preventing the hydrogen from being properly formed from the fuel.

DLN combustors are usually limited by pressure oscillations known as "dynamics" in regards to their ability to accommodate different fuels. This is due to the change in pressure ratio of the injection system that results from changes in the volumetric fuel flow required. This constraint is captured by the Modified Wobbe Index; i.e., the combustion system will have a design Wobbe number for improved dynamics. The Modified Wobbe Index (MWI) is proportional to the lower heating value in units of BTU/scf and inversely proportional to the square root of the product of the specific gravity of the fuel relative to air and the fuel temperature in degrees Rankine. DLN combustors are generally designed to operate within a narrow range of MWI, typically no more than ±5% MWI deviation from a design target. As fuel composition changes, for instance, by a decrease in the quantity of inert gas in the fuel supply, the MWI may drift out of compliance with the design range, requiring control action, for instance to reduce turbine load or change fuel temperature in response. Gas turbines are increasingly exposed to MWI variation as gas fuel sources become more diverse, in part due to penetration in the markets of liquid natural gas and also in part due to new environmental technologies, such a biofuels and synthetic gases. Controlling the MWI into the gas turbine to fixed set points will reduce the effect of this variation in fuel source MWI.

### BRIEF DESCRIPTION OF THE INVENTION

According to one aspect of the invention, a gas turbine engine system includes a compressor, a combustor, a turbine and a fuel system comprising one or more fuel circuits configured to provide fuel from a fuel source to the combustor. The system also includes a non-catalytic fuel reformer in fluid communication with the one or more fuel circuits, wherein the non-catalytic fuel reformer is configured to receive an oxidant from an oxidant flow and a fraction of fuel in the one or more fuel circuits in a predetermined ratio and reform the fraction of the fuel to produce a partially oxidized fuel. The system further includes a secondary fuel supply to add a secondary fuel flow to the partially oxidized fuel from the non-catalytic fuel reformer, a steam supply to add a steam flow to the partially oxidized fuel from the non-catalytic fuel reformer, and a non-catalytic reaction passage in a downstream portion of the non-catalytic fuel reformer, the non-catalytic reaction passage configured to receive a mixture of the secondary fuel flow, the steam flow and the partially oxidized fuel. The system further includes a control system configured to regulate at least one of fuel flow to the non-catalytic fuel reformer, oxidant flow to the non-catalytic fuel reformer, the secondary fuel flow and the steam flow.

According to another aspect of the invention, a method for providing a fuel supplied to one or more combustors in a gas turbine engine system includes partially oxidizing a primary fraction of fuel in one or more fuel circuits of the gas turbine engine system, in the absence of a catalyst, with a non-catalytic fuel reformer to form a reformate, wherein the primary fraction of fuel and an oxidant are mixed and burned in a predetermined ratio in the non-catalytic fuel reformer. The method also includes causing a water-gas shift reaction in a non-catalytic reaction passage in the non-catalytic fuel reformer by directing a selected amount of secondary fuel and a selected amount of steam into the partially oxidized fraction of fuel, thereby producing a reformate and mixing the reformate with a remaining fraction of fuel to produce a mixed fuel stream and supplying the mixed fuel stream to the one or more combustors.

These and other advantages and features will become more apparent from the following description taken in conjunction with the drawings.

### BRIEF DESCRIPTION OF THE DRAWINGS

Embodiments of the present invention will now be described, by way of example only, with reference to the accompanying drawings in which:
FIG. 1 is a schematic diagram of a gas turbine engine system; and
FIG. 2 is a schematic diagram of an exemplary embodiment of a reformer in fluid communication with a fuel circuit of the gas turbine engine system of FIG. 1.

The detailed description explains embodiments of the invention, together with advantages and features, by way of example with reference to the drawings.

### DETAILED DESCRIPTION OF THE INVENTION

Described herein are gas turbine engine combustion systems, and more particularly, methods and apparatus for rich premixed fuel reforming to enhance the operability of the combustion systems. The gas turbine engine combustion systems utilize a non-catalytic fuel reformer in fluid communication with one or more of the fuel circuits to partially oxidize a portion of the fuel stream feeding the gas turbine. The fuel reformer provides a means to control the MWI into the gas turbine within fixed set points, regardless of the MWI of the incoming fuel stream, and in the absence of expensive catalysts. The MWI is controlled by controlling the fraction of the total gas turbine fuel diverted to the primary fuel stream entering the non-catalytic fuel reformer.

Moreover, the non-catalytic fuel reformer provides a selected amount of steam and a selected amount of secondary fuel that is combined with the partially oxidized fuel (also referred to as "oxidized fuel," "reformed fuel" or "reformate") to produce additional hydrogen and/or carbon monoxide (CO) to be mixed with the fuel stream. The addition of secondary fuel and steam promotes a water-gas shift reaction that produces hydrogen and CO from the partially oxidized fuel without a catalyst in a reaction region of the reformer. The water-gas shift reaction is described by CH4 + H2O = 3H2 + CO. The non-catalytic fuel reformer is in operative communication with an engine control system to provide the fuel conditioning as needed to achieve the required emissions control (e.g., NOx, CO, UHC) or operability (e.g. combustion pressure oscillations, also known as combustion dynamics or dynamics). As used herein, the term "fuel reformer" generally refers to a thermal reactor, or conventional combustor, configured to reform fuel premixed with an oxidant in a near-stoichiometric or rich (i.e., oxygen-deficient) environment. The fuel reformer as described herein does not utilize a catalyst, thereby reducing cost and reducing or eliminating regular maintenance necessary to recharge the catalyst and the costs associated therewith.

The choice of near-stoichiometric or fuel-rich operation depends on the particular objectives of the system being designed and will be predetermined. If the objective is primarily to control MWI, the reformer can operate near the stoichiometric fuel-air ratio, and the reformate will be an inert (non-flammable) combustion product comprising mostly H₂O and CO₂, with a small proportion of CO, and a balance of inert gas (N₂) as may be introduced with the oxidant. The temperature of the reformate will be relatively high, and relatively high concentrations of NOₓ will be produced in the reformate before it is blended back into the main fuel gas stream. Conversely, if the objectives are both control of MWI and production of hydrogen and CO, while limiting NOₓ production, the reformer can be operated in the fuel-rich regime, below the reformate temperature at which high concentrations of NOₓ are produced. In either case, a water-gas shift reaction region in the reformer is configured to receive a mixture of the partially oxidized fuel, a flow of steam and a flow of secondary fuel. The mixture has a sufficient residence time in the water-gas shift reaction region to react and thus create hydrogen and CO via an endothermic water-gas shift reaction. The reformate, comprising the partially oxidized fuel and the enhanced amount of hydrogen and CO, flows from the reaction region and is then mixed with the remainder of fuel supplied to the gas turbine combustors to improve combustor performance, emissions and stability.

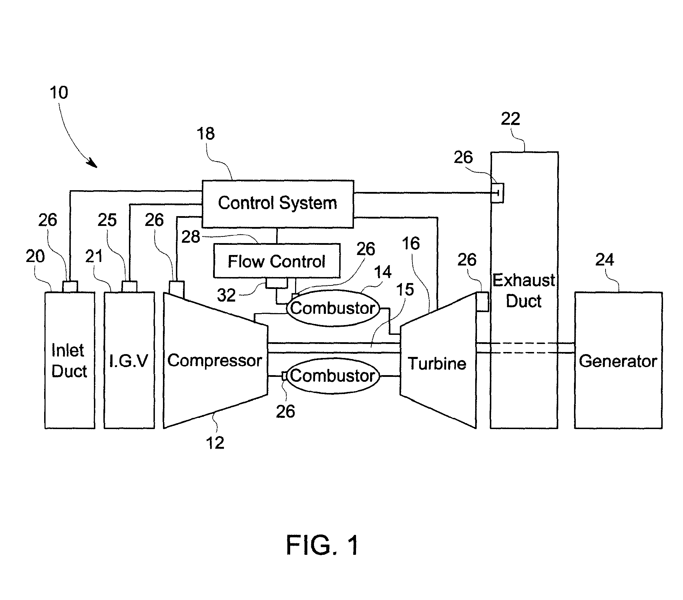

FIG. 1 is a schematic diagram of a gas turbine engine system 10 including a compressor 12, a combustor 14, and a turbine 16 coupled by a drive shaft 15 to the compressor 12. As seen in the figure, the system 10 can have a single combustor or a plurality of combustors (two shown in the figure). In one embodiment, the combustors are DLN combustors. In another embodiment, the combustors are lean premixed combustors. The gas turbine engine is managed by a combination of operator commands and a control system 18. An inlet duct system 20 channels ambient air to the compressor inlet guide vanes 21 which, by modulation with actuator 25, regulate the amount of air to compressor 12. An exhaust system 22 channels combustion gases from the outlet of turbine 16 through, for example, sound absorbing, heat recovery and possibly emissions control devices. Turbine 16 may drive a generator 24 that produces electrical power or any other type of mechanical load.

The operation of the gas turbine engine system 10 may be monitored by a variety of sensors 26 detecting various conditions of the compressor 12, turbine 16, generator 24, and ambient environment. For example, sensors 26 may monitor ambient temperature, pressure and humidity surrounding gas turbine engine system 10, compressor discharge pressure and temperature, turbine exhaust gas temperature and emissions, and other pressure and temperature measurements within the gas turbine engine. Sensors 26 may also comprise flow sensors, speed sensors, flame detector sensors, valve position sensors, guide vane angle sensors, dynamic pressure sensors, and other sensors that sense various parameters relative to the operation of gas turbine engine system 10. As used herein, "parameters" refer to physical properties whose values can be used to define the operating conditions of gas turbine engine system 10, such as temperatures, pressures, fluid flows at defined locations, and the like.

In addition to the above-mentioned sensors 26 there may be one or more sensors to monitor, measure or infer fuel properties sufficiently to determine the fuel composition prior to and/or after the non-catalytic fuel reformer 32 described below. The sensors may sense one or more of the following: fractional (fuel) composition, hydrogen content, carbon monoxide content, a parameter representative of the fuel MWI, fuel temperature, fuel and oxidant flow rates, products temperature, and the like.

A flow controller 28 responds to commands from the control system 18 to continuously regulate the fuel flowing from a fuel supply to the combustor(s) 14, and the fuel splits (independently controlled fuel supply to fuel circuits) to multiple fuel nozzle injectors (i.e., fuel circuits) located within each of the combustor(s) 14. The flow controller 28 also responds to control system 18 commands controlling flows of steam, oxidant, primary and secondary fuel into the non-catalytic fuel reformer 32. By modulating fuel splits via the flow controller 28 among the several fuel gas control valves, and controlling the flow of steam, oxidant, primary and secondary fuel flowing to the non-catalytic fuel reformer 32 with the control system 18, emissions, flame stability, turbine load turndown and dynamics are improved over the machine load range.

The control system 18 may be a computer system having a processor(s) that executes programs to control the operation of the gas turbine using the sensor inputs described above and instructions from additional operators. The programs executed by the control system 18 may include scheduling algorithms for regulating primary fuel flow, oxidant, steam flow, secondary fuel flow and fuel splits to combustor(s) 14. More specifically, the commands generated by the control system cause actuators in the flow controller 28 to regulate primary fuel flow to both the non-catalytic fuel reformer 32 and the fuel nozzle injectors, adjust inlet guide vanes 21 on the compressor, regulate the flow of an oxidant source to the non-catalytic fuel reformer 32, regulate flow of steam to the fuel reformer 32, regulate a secondary flow of fuel to the fuel reformer 32 or control other system settings on the gas turbine.

The algorithms thus enable control system 18 to maintain the combustor firing temperature and exhaust temperature to within predefined temperature limits and to maintain the turbine exhaust NOx and CO emissions to below predefined limits at part-load through full load gas turbine operating conditions. The combustors 14 may be a DLN combustion system, and the control system 18 may be programmed and modified to control the fuel splits for the DLN combustion system according to the predetermined fuel split schedules. All such control functions have a goal to improve operability, reliability, and emissions of the gas turbine. As will be described in detail below, the secondary fuel flow is a flow of fuel that may be diverted from the main fuel flow or from a dedicated secondary fuel supply, wherein the secondary fuel flow is a selected amount of fuel that is added to the fuel reformer 32 after partial oxidation of the fuel.

The non-catalytic fuel reformer 32 is in fluid communication with the fuel flow of one or more fuel circuits (not shown) in the fuel control system 28. The non-catalytic fuel reformer is fed a mixture of oxidant and fuel, wherein the fuel and oxidant is premixed and then burned in the non-catalytic fuel reformer. The oxidant can be supplied to the non-catalytic fuel reformer by the compressor 12 or it may be provided by a separate oxidant supply. Exemplary oxidants to be provided to the non-catalytic fuel reformer can include, without limitation, pure oxygen, air, oxygen-enriched air, combinations thereof, and the like. After partially oxidizing the primary portion of the fuel stream, steam and secondary fuel are introduced into the partially oxidized primary portion of the fuel stream to promote a water-gas shift reaction within a water-gas shift reaction region, thereby producing hydrogen and/or CO in the stream directed to the combustor. The oxidized fuel, steam and secondary fuel have sufficient residence time in the reaction region to react and produce hydrogen and CO in the absence of a catalyst.

In one exemplary embodiment, the primary fuel and oxidant are premixed to a ratio that is fuel-rich, oxygen-depleted. An exemplary mixture ratio of oxygen-to-fuel will be sufficiently reactive to support a conventional premixed flame in the non-catalytic fuel reformer without the flame temperature being so high as to generate appreciable concentrations of NOx. The range of acceptable mixture ratios in the non-catalytic fuel reformer, therefore, is fairly narrow between these two limits and will depend in large part on the composition of the fuel entering the reformer. In one embodiment, the mass ratio of oxygen-to-fuel is generally in the range of about 1.5:1 1 to about 4:1, and more specifically about 2.3:1, where the fuel is methane. In an exemplary embodiment, where the gas turbine combustion system is utilizing methane fuel and air as oxidant, the mass ratio of air-to-fuel is 10:1. Such a fuel-rich, oxygen-depleted premixed mixture in the non-catalytic fuel reformer when combusted produces carbon dioxide, carbon monoxide, hydrogen, and water from the methane. When air or oxygen-enriched air is used in the non-catalytic fuel reformer, nitrogen is generally present in the combustion products as an inert gas that passes through the reaction. The reformate is then blended back in with the balance of the fuel stream. In an embodiment, the arrangement is primarily used for the production of H₂ and CO to promote extended lean stability of the gas turbine combustion process.

In another exemplary embodiment, with air as the oxidant and methane as the fuel, the mass ratio of air-to-fuel is generally between about 20:1 to 5:1; specifically about 18:1 to 10:1; and more specifically about 17:1. Such a near-stoichiometric fuel-air mixture will result in reformate containing predominantly H₂O, CO₂, and N₂, with very small amounts of H₂ and CO. The resulting mixture will be sufficiently oxygen-depleted that it is no longer flammable, and carries no risk of further combustion when blended back into the fuel stream. The objectives of this embodiment are a combination of MWI control and production of H₂ and CO.

In embodiments, the resulting reformate is fed into the water-gas shift reaction region of the non-catalytic reformer, along with secondary fuel and steam, to promote the production of hydrogen and CO via the water-gas shift reaction. The heat required to support the endothermic water-gas shift reaction is supplied by the heat released from partial oxidation in the upstream portion of the reformer.

Control of the proportion of fuel diverted to the non-catalytic fuel reformer 32 is a means of controlling the MWI of the resultant mixed fuel stream in response to variation in composition of the incoming fuel. The MWI is reduced to its predetermined target value by a combination of the addition of inert species (e.g., carbon dioxide, water vapor) in the mixed fuel stream and the temperature rise due to the exothermic nature of the reaction.

The non-catalytic fuel reformer 32 can be used to partially reform any gas and/or liquid fuel typically used in gas turbine engine combustion systems, such as natural gas (methane) and other like gaseous-phase fuels. The non-catalytic fuel reformer 32 is configured to partially oxidize a small percentage of the fuel to form hydrogen, carbon monoxide, and other combustion products. The non-catalytic fuel reformer can reform about 0.1 volume percent (vol%) to about 100 vol% of the fuel, specifically about 1 vol% to about 50 vol%, more specifically about 2 vol% to about 20 vol%, and even more specifically about 3 vol% to about 10 vol%. The desired percentage of fuel reformed can depend on a number of factors such as, without limitation, turbine load, fuel type, water and/or oxidant additives, fuel temperature, emissions, and the like. The control system 18 can be configured to regulate fuel flow to the non-catalytic fuel reformer 32 and control the percentage of fuel reformed based on feedback from any of the sensors 26.

The non-catalytic fuel reformer 32 can be disposed in any location in fluid communication with the fuel system of the gas turbine combustion system wherein the non-catalytic fuel reformer 32 can receive at least a portion of the fuel and a supply of steam. The non-catalytic fuel reformer system can be in fluid communication with one fuel circuit of the combustor or a plurality of the fuel circuits. Moreover, a gas turbine combustion system can comprise a single non-catalytic fuel reformer or a plurality of non-catalytic fuel reformers in fluid communication with one or more of the fuel circuits.

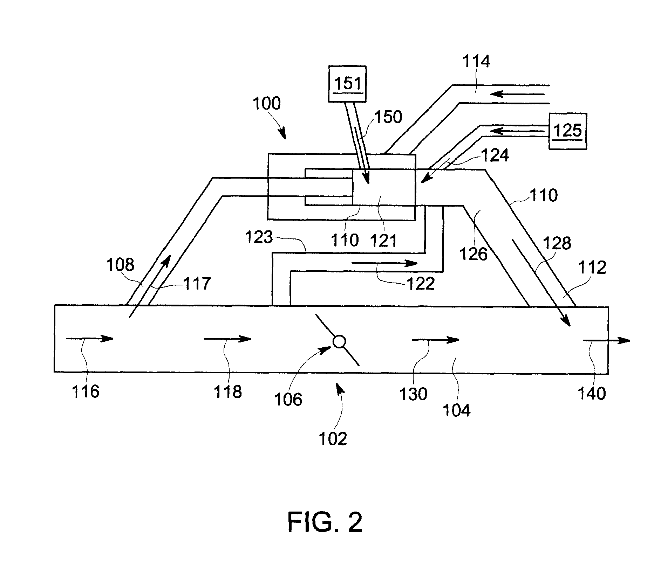

FIG. 2 illustrates an exemplary embodiment of a non-catalytic fuel reformer 100 in fluid communication with a fuel circuit 102. The non-catalytic fuel reformer 100 is disposed adjacent to the fuel conduit 104 such that a portion of the fuel flowing through the fuel conduit 104 is diverted to pass through the non-catalytic fuel reformer 100. As depicted, a portion of the fuel can be diverted into an inlet 108 of the non-catalytic fuel reformer 100 through the operation of a valve system. In the embodiment of FIG. 2, a valve 106 is shown disposed in fuel conduit 104. When closed, the valve 106 is configured to controllably divert a portion of the fuel from the fuel conduit 104 to the reformer conduit 110. The valve 106 may include one or more suitable valve assemblies, such as throttle valves or by-pass valves. The valve 106 as well as the non-catalytic fuel reformer 100 can be in operative communication with an engine control system to provide on-demand reformation of a specific portion of the turbine fuel. An oxidant inlet 114 is in fluid communication with the non-catalytic fuel reformer 100 and is configured to provide oxygen for premixing with the fuel before combustion in the fuel reformer. The oxidant inlet 114 can be in fluid communication with the compressor of the gas turbine or it can be in fluid communication with a separate oxidant supply. Again, the oxidant inlet 114 can supply oxygen, air, oxygen-enriched air, or combinations thereof to the non-catalytic fuel reformer 100.

As depicted, a primary fuel flow 116 flows within the fuel conduit and a portion 117 of the primary fuel flow 116 flows into the non-catalytic fuel reformer 100 through inlet 108. The remaining portion of the primary fuel flow 116 is directed past the inlet 108 wherein a remainder fuel flow 118 is formed from a portion of the primary fuel flow 116. After the oxidant flowing through oxidant inlet 114 mixes with fuel inside the reformer conduit 110, combustion occurs within a combustion region 121, thereby producing partially oxidized or reformed fuel. A secondary fuel flow 122 and a steam flow 124 are then directed into the partially oxidized fuel downstream of the combustion region 121. The secondary fuel flow 122 is metered through passages 123 between the fuel conduit 104 and the reformer conduit 110. Passages 123 may include valves (not shown) providing additional flow control. In embodiments, the secondary fuel flow 122 is supplied by portions of the remainder fuel flow 118 or a separate fuel supply dedicated to the non-catalytic fuel reformer 100. The steam flow 124 may be supplied by a suitable source, such as a steam supply 125 that includes a water line that is heated by heated portions of the turbine, or the steam created in the boiler section of a combined-cycle power plant.

In an embodiment, steam may be provided by directing a water supply into the conduit 110 and heating it. For example, a liquid water 150 ("water supply") may be directed into the combustion region 121, wherein a liquid water source 151 supplies the water. The liquid water flow 150 is injected to enable the heat of vaporization of the water to absorb heat from the combustion region 121, reducing the region's effective temperature and the propensity to produce NOx. The heat of reaction in the combustion region 121 vaporizes the liquid water 150 to produce the steam used in reaction region 126. Thus, in one embodiment, the liquid water flow 150 may be used instead of, or in addition to the steam flow 124, to supply the steam for the reaction region 126. In embodiments, the liquid water may be provided at any suitable location upstream of the reaction region 126, wherein the supplied liquid water is converted to steam for the water-gas shift reaction.

With continued reference to FIG. 2, the secondary fuel flow 122 and steam flow 124 are added and mixed with the oxidized fuel to cause a water-gas shift in a water-gas shift reaction region 126 inside the reformer. The water-gas shift reaction region 126 is configured to allow a sufficient residence time for the steam, secondary fuel and partially oxidized fuel to react, thereby producing additional hydrogen and CO in a reformate. Due to the design of the non-catalytic fuel reformer 100, the additional hydrogen and CO are produced without a catalyst, thereby reducing cost and maintenance while improving robustness of the reformer. A fuel flow 128, also referred to as reformate, from the non-catalytic fuel reformer 100 provides enhanced amounts of hydrogen and/or CO to be mixed with remainder fuel flow 130 to improve flame stability within the combustor 14 (FIG. 1), thereby improving turndown performance. The water-gas shift reaction is an endothermic reaction, thereby absorbing energy and producing lower temperature products as compared to that of the incoming reformate. The energy is supplied from the heat of reaction in the partial oxidation process; thus, the reaction does not use any external energy. The reaction is able to occur due to sufficient residence time within the water-gas shift reaction region 126. Further, in an example, a mixed fuel stream 140, comprising 128 and 130, has a temperature of about 300 to about 600 degrees Fahrenheit to control the MWI of the mixed fuel stream. The increased reactivity of the mixed fuel stream, 128 and 130, allows the combustion flame to stabilize at a lower adiabatic temperature than an equivalent flame from fuel flow without enhanced amounts of hydrogen. Further, by operating the combustor at leaner flame conditions, due to the additional hydrogen and/or CO, the turbine may achieve lower NOx emissions as well.

The non-catalytic fuel reformer described herein is in operative communication with an engine control system configured to provide control of the fraction of the fuel reformed and amounts of steam and secondary fuel supplied. Thus, the engine control system controls the amount of hydrogen and CO in the mixed fuel stream as well as the MWI of the mixed fuel stream fed to the gas turbine combustor. The control system can monitor feedback from sensors, thermocouples, and the like that can detect, among other things, the fuel fraction diverted to the non-catalytic fuel reformer, the MWI of the incoming main fuel stream and the temperature of the steam. The control system further monitors process conditions, such as temperatures and pressures, throughout the gas turbine engine combustion system. Such a control system can be employed to adjust fuel feed rates, fuel pressures, valve operation of the fuel reformer, adjust supplementary process gas feed rates (e.g., feed rate from the oxidant inlet, steam supply and secondary fuel), or control other like conditions within the gas turbine system. A fuel gas analysis subsystem can further be included to provide additional feedback to such a control system. The control system can operate and control the fuel reformer based on any number of process parameters. Feedback from sensors, thermocouples, and the like also alert the control system to various other conditions within the gas turbine system. Exemplary process parameters can include, without limitation, temperature (e.g., ambient temperature, fuel temperature, nozzle temperature, combustor temperature, and the like), humidity, inlet pressure loss, dynamic pressure, exhaust backpressure, exhaust emissions (e.g., NOx, CO, UHC, and the like), turbine load/power, a parameter representative of fuel MWI, and the like. This feedback loop between the parameters monitoring and the control system can indicate the need to alter the MWI of the mixed fuel stream or the reactivity of the fuel, including hydrogen content. The loop can, therefore, change the mixture ratio or the amount of steam and secondary fuel supplied within the non-catalytic fuel reformer by changing one or more of the fuel flow, oxidant flow, steam flow and secondary fuel flow. When certain parameters reach a predetermined target, it may be suitable to alter the portion of the fuel being reformed or even momentarily cease reforming altogether.

The non-catalytic fuel reformer and method of its use in a gas turbine engine combustion system as described herein can advantageously reform a portion of fuel in one or more fuel circuits to control the MWI, the hydrogen content and the CO content of the fuel feeding the turbine combustor despite variation of MWI in the incoming fuel stream. Moreover, the non-catalytic fuel reformer is further configured to increase the fuel reactivity, thereby improving turbine turndown. Greater load turndown can be achieved by the gas turbines due to the extension of lean limits by the doping of hydrogen and carbon monoxide in the fuel via the non-catalytic fuel reformer. The non-catalytic fuel reformer can permit current gas turbines with current low-emissions combustions systems to be used in markets where fuel variability normally precludes the application of lean, premixed combustion systems, or at least greatly reduces their low-emissions effectiveness due to dynamic combustion instability. Further, the non-catalytic fuel reformer as described herein does not require a catalyst and does not promote a catalytic reaction therein with respect to the oxidation process or for the water-gas shift reaction.

The terminology used herein is for the purpose of describing particular embodiments only and is not intended to be limiting of the invention. Ranges disclosed herein are inclusive and combinable (e.g., ranges of "up to about 25 vol%, or, more specifically, about 5 vol% to about 20 vol%", is inclusive of the endpoints and all intermediate values of the ranges of "about 5 vol% to about 25 vol%," etc.). "Combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A gas turbine engine system, comprising:
   a compressor, a combustor, and a turbine;
   a fuel system comprising one or more fuel circuits configured to provide fuel from a fuel flow to the combustor;
   a non-catalytic fuel reformer in fluid communication with the one or more fuel circuits, wherein the non-catalytic fuel reformer is configured to receive an oxidant from an oxidant flow and a fraction of primary fuel in the one or more fuel circuits in a predetermined ratio and to produce a partially oxidized fuel;
   a secondary fuel supply to add a secondary fuel flow to the partially oxidized fuel from the non-catalytic fuel reformer;
   a water supply to add a steam flow to the partially oxidized fuel from the non-catalytic fuel reformer; and
   a non-catalytic reaction passage in a downstream portion of the non-catalytic reformer, the non-catalytic reaction passage configured to receive a combination of the secondary fuel flow, the steam flow and the partially oxidized fuel.
2. The system of clause 1 comprising a control system configured to regulate at least one of the secondary fuel flow and the steam flow to control an amount of at least one of hydrogen and carbon monoxide of the fuel entering the combustor.
3. The system of clause 1, wherein the non-catalytic fuel reformer produces a reformate comprising hydrogen, carbon dioxide, carbon monoxide, water and nitrogen, wherein the non-catalytic reaction passage causes a water-gas shift reaction to increase an amount of hydrogen in the reformate.

## Claims

1. A gas turbine engine system (10), comprising:
a compressor (12), a combustor (14), and a turbine (16);
a fuel system comprising one or more fuel circuits (102) configured to provide fuel from a fuel source to the combustor (14);
a non-catalytic fuel reformer (100) in fluid communication with the one or more fuel circuits (102), wherein the non-catalytic fuel reformer (32,100) is configured to receive an oxidant from an oxidant flow (114) and a fraction of fuel (117) in the one or more fuel circuits (102) in a predetermined ratio and reform the fraction of the fuel (117) to produce a partially oxidized fuel;
a secondary fuel supply to add a secondary fuel flow (122) to the partially oxidized fuel from the non-catalytic fuel reformer (32,100);
a water supply (150) to add a steam flow (124) to the partially oxidized fuel from the non-catalytic fuel reformer (32,100);
a non-catalytic reaction passage in a downstream portion of the non-catalytic reformer (32,100), the non-catalytic reaction passage configured to receive a mixture of the secondary fuel flow (122), the steam flow (124) and the partially oxidized fuel; and
a control system (18) configured to regulate at least one of fuel flow to the non-catalytic fuel reformer (32,100), oxidant flow to the non-catalytic fuel reformer (32,100), the secondary fuel flow (122) and the steam flow (124).

2. The system of claim 1, wherein the non-catalytic fuel reformer (32,100) further comprises a bypass conduit (104) having an inlet (108) and an outlet (112) and configured to divert the fraction of the fuel to the non-catalytic fuel reformer (32,100).

3. The system of claim 2, further comprising at least one valve (106) configured to control the flow of the fuel through the bypass conduit (104).

4. The system of any of claims 1 to 3, wherein the water supply is a steam supply (125).

5. The system of any of claims 1 to 4, wherein the control system (18) is configured to regulate at least one of the secondary fuel flow (122) and the steam flow (124) to control an amount of at least one of hydrogen and carbon monoxide of the fuel entering the combustor (14).

6. The system of any of claims 1 to 5, wherein the combination of partially oxidized fuel (117), steam (124) and secondary fuel (122) produces a reformate via a water-gas shift reaction.

7. The system of claim 6, wherein the reformate comprises hydrogen, carbon dioxide and carbon monoxide.

8. The system of any preceding claim, wherein the combustor (14) is at least one of a Dry Low NOx and a lean, premixed combustor.

9. The system of any preceding claim, wherein the oxidant comprises oxygen, air, oxygen-enriched air, or a combination comprising at least one of the foregoing.

10. The system of any preceding claim, wherein the non-catalytic fuel reformer (32,100) further comprises an oxidant inlet (114) configured to deliver the oxidant to the non-catalytic fuel reformer (32,100), wherein the oxidant inlet (114) is in fluid communication with the compressor (12).

11. The system of any preceding claim, wherein the fuel comprises methane and the predetermined ratio is one of a fuel-rich oxygen-to-methane mass ratio of about 2.3:1 a near-stoichiometric air-to-methane mass ratio of about 17:1 1

12. A method for providing a fuel supplied to one or more combustors (14) in a gas turbine engine system (10), comprising:
partially oxidizing a fraction of primary fuel (117) in one or more fuel circuits (102) of the gas turbine engine system (10), in the absence of a catalyst, with a non-catalytic fuel (100) reformer to form a reformate (128), wherein the fraction of primary fuel (117) and an oxidant (116) are mixed and burned in a predetermined ratio in the non-catalytic fuel reformer (100);
causing a water-gas shift reaction in a non-catalytic reaction passage (126) in the non-catalytic fuel reformer (100) by directing a selected amount of secondary fuel (122) and a selected amount of steam (124) into the partially oxidized fraction of fuel (117), thereby producing a reformate (128); and
mixing the reformate (128) with a remaining fraction of fuel (130) to produce a mixed fuel stream (140) and supplying the mixed fuel stream (140) to the one or more combustors (14).

13. The method of claim 12, wherein the fraction of the fuel (117) is about 3 volume percent to about 10 volume percent of the total volume of fuel in the one or more fuel circuits (102).

14. The method of claim 12 or 13, comprising controlling at least one of primary fuel flow to the non-catalytic fuel reformer (100), oxidant flow (116) to the non-catalytic fuel reformer (100), secondary fuel flow (122) and steam flow (124) with a control system (18).

15. The method of any of claims 12 to 14, wherein the controlling at least one of primary fuel flow to the non-catalytic fuel reformer (100), oxidant flow (116) to the non-catalytic fuel reformer (100), secondary fuel flow (122) and steam flow (124) further comprises monitoring a selected one or more of fuel temperature, fuel composition, fuel Modified Wobbe Index, humidity, dynamic pressure, ambient temperature and turbine load.
